(19) Europäisches Patentamt
European Patent Office
Office européen des brevets

(11) **EP 2 067 249 B1**

(12) **EUROPÄISCHE PATENTSCHRIFT**

(45) Veröffentlichungstag und Bekanntmachung des Hinweises auf die Patenterteilung:
**16.01.2019 Patentblatt 2019/03**

(21) Anmeldenummer: **07788120.9**

(22) Anmeldetag: **01.08.2007**

(51) Int Cl.:
***H02P 6/18*** (2016.01)

(86) Internationale Anmeldenummer:
**PCT/EP2007/057950**

(87) Internationale Veröffentlichungsnummer:
**WO 2008/034670 (27.03.2008 Gazette 2008/13)**

(54) **VERFAHREN ZUM BETREIBEN EINES ELEKTRONISCH KOMMUTIERENDEN ELEKTROMOTORS**

METHOD FOR OPERATING AN ELECTRONICALLY COMMUTATING ELECTRIC MOTOR

PROCEDE DE FONCTIONNEMENT D'UN MOTEUR ELECTRIQUE A COMMUTATION ELECTRONIQUE

(84) Benannte Vertragsstaaten:
**DE ES GB IT SE**

(30) Priorität: **18.09.2006 DE 102006043683**

(43) Veröffentlichungstag der Anmeldung:
**10.06.2009 Patentblatt 2009/24**

(73) Patentinhaber: **Robert Bosch GmbH**
**70442 Stuttgart (DE)**

(72) Erfinder: **FRICKER, David**
**F-67240 Kaltenhouse (FR)**

(56) Entgegenhaltungen:
**EP-A- 1 014 556     DE-A1- 10 162 380**
**US-A- 5 841 252     US-A1- 2001 030 517**

EP 2 067 249 B1

**Beschreibung**

Die Erfindung betrifft ein Verfahren zum Betreiben eines elektronisch kommutierenden Elektromotors, insbesondere während seiner Hochlaufphase, unter Berücksichtigung der jeweiligen Drehwinkellage seines Rotors.

In der DE10162380 A1, der EP1014556 A1, der US5841252 A und der US2001030517 A sind gattungsgemäße Verfahren zum Betreiben von elektrischen Maschinen offenbart.

Um einen elektrisch kommutierenden Elektromotor (EC-Motor) sensorlos zu betreiben, wird bekannterweise die induzierte Spannung ausgewertet. Im einfachsten Fall erfolgt die Auswertung von deren Nulldurchgängen. Bekannt ist auch eine modellbasierende Verfahrensführung. Im Stillstand beziehungsweise bei kleinen Drehzahlen kann jedoch auf diese Größen noch nicht zurückgegriffen werden. Um den Elektromotor auf eine Drehzahl zu bringen, bei der die induzierten Spannungen auswertbar werden, ist es bekannt, den Motor mittels einer Ausrichtphase und einer anschließenden blinden Kommutierung (ähnlich wie bei einem Schrittmotor) zu betreiben. Ferner ist es bekannt, ein hochfrequentes Spannungssignal einzuspeisen und die durch Induktivitätsveränderung verzerrte Stromantwort mittels Filter und PLL-Verfahren auszuwerten. Bekannt ist es ferner, über kurze Spannungsimpulse eine Reaktanzmessung zu tätigen, um die Induktivitätsänderungen auszuwerten. Schließlich ist es noch bekannt, längere Spannungsimpulse aufzubringen, um die Sättigungseffekte auszunutzen.

Die vorstehend genannten, bekannten Verfahren, um den Motor auf Drehzahl zu bringen, haben Nachteile. So ist beim erstgenannten Verfahren die Ausrichtphase zeitaufwendig und der abschließende Schrittmotorbetrieb lässt sich nicht einwandfrei überwachen, sodass ein Anlauf des Motors nicht sicher gewährleistet ist. Die folgenden beiden, erwähnten Verfahren erfordern die Messung jedes Strangstromes und sind daher aufwendig. Zusätzlich muss zur Auswertung eine relativ große Rechnerleistung zur Verfügung gestellt werden. Beim letztgenannten, bekannten Verfahren sind längere Testimpulse aufzubringen, sodass während der Messphase das Drehmoment des Motors entfällt. Überdies entstehen Geräusche.

Aufgrund des erfindungsgemäßen Vorgehens, das in Anspruch 1 definiert ist, ist beim Anlauf des Elektromotors eine Positionsinformation und damit eine entsprechende Sicherheit gewährleistet. Die Anforderungen an die Mess- und Auswerteeinrichtungen sind relativ gering. Die Messzeiten sind recht kurz. Ferner ergeben sich Dynamikvorteile beim Anlauf gegenüber den bekannten Verfahren. Als Kriterium sind Zeitdauern herangezogen, die zwischen dem Vorliegen zweier Stromwerte der Stromimpulse und zweiter Flusswerte liegen. Die Stromänderungen werden durch Messung des jeweiligen Motorstroms erfasst. Der Zwischenkreisstrom der Leistungselektronikbrücke wird dabei erfasst.

Erfindungsgemäß erfolgt die Beaufschlagung des Elektromotors mit in ihrer Phasenlage unterschiedlichen Spannungstestimpulsen. Hieraus ergibt sich ein Resultat, das zum Bilden mindestens eines Kriteriums herangezogen wird. Werte des Kriteriums werden erfasst und miteinander verglichen. Dieser Vergleich ermöglicht die Bestimmung der jeweils vorliegenden Drehwinkellage des Rotors des Elektromotors. Ist diese Drehwinkellage bekannt, so kann er während der Hochlaufphase und/oder während des Betriebs danach stets winkelentsprechend angesteuert werden, sodass ein einwandfreier Anlauf und Betrieb gewährleistet ist. Ist eine untere Drehzahl überschritten, so kann auf einen Kommutierungsbetrieb unter Verwendung der induzierten Spannungen übergegangen werden. Das Ansteuern des elektronisch kommutierenden Elektromotors erfolgt vorzugsweise mit einer Leistungselektronikbrücke, das heißt, in den einzelnen Versorgungszweigen der Brücke liegen steuerbare Leistungs-Elektronikbauteile, die von einem Steuergerät angesteuert werden. Aufgrund des erfindungsgemäßen Verfahrens ist dem Steuergerät die Drehwinkellage des Rotors bekannt, sodass das Steuergerät die notwendigen Kommutierungen zu den richtigen Zeitpunkten durchführen kann.

Nach einer Weiterbildung der Erfindung ist vorgesehen, dass die Spannungstestimpulse aus einer Verkettung von Phasenspannungen des Elektromotors gebildet werden. Hierdurch lassen sich auf einfache Art und Weise die Spannungstestimpulse erzeugen.

Ferner ist es vorteilhaft, wenn das Resultat Stromimpulse sind, die aus den Spannungstestimpulsen resultieren. Demgemäß erfolgt das Beaufschlagen des Elektromotors mit Spannungstestimpulsen, die zu einem entsprechenden Stromfluss, nämlich den erwähnten Stromimpulsen führen.

Vorzugsweise wird derart vorgegangen, dass die Spannungstestimpulse mindestens solange wirken, bis die Amplituden der zugehörigen Stromimpulse jeweils bis auf einen vorgegebenen Stromreferenzwert angestiegen sind.

Zum Bilden eines Kriteriums werden Stromänderungen der Stromimpulse und magnetische Flussänderungen im Elektromotor herangezogen. Hierbei handelt es sich insbesondere um magnetische Flussänderungen, die aus den Stromimpulsen resultieren.

Es ist vorteilhaft, wenn die Flussänderungen durch Integration der jeweiligen Motorspannung gebildet werden.

Als Kriterium werden Zeitdauern herangezogen, die zwischen dem Vorliegen zweier Stromwerte der Stromimpulse und zweiter Flusswerte liegen.

**Kurze Beschreibung der Zeichnungen**

Die Zeichnungen veranschaulichen die Erfindung anhand von Ausführungsbeispielen, und zwar zeigt:

Figur 1          ein Blockschaltbild eines Elektromotors mit Versorgung und Steuerung,

Figur 2          ein Spannungsdiagramm,

Figuren 3a bis 3c    verschiedene Diagramme,

Figuren 4a, 4b       verschiedene Diagramme und

Figuren 5a bis 5c    Diagramme nach einem weiteren Ausführungsbeispiel der Erfindung.

## Ausführungsform(en) der Erfindung

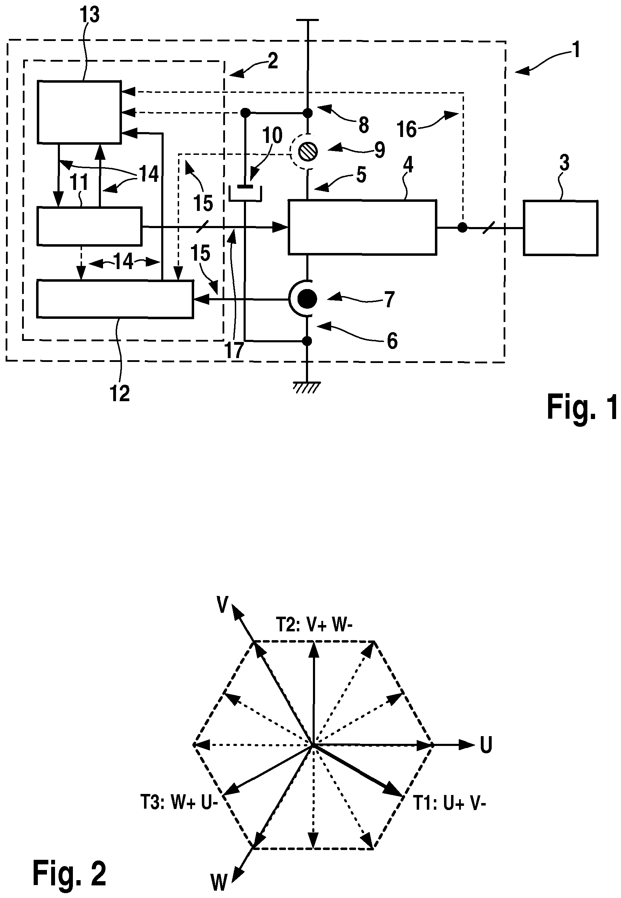

Die Figur 1 zeigt eine Versorgungsschaltung 1, an die ein Elektromotor 3 angeschlossen ist. Der Elektromotor 3 ist als EC-Motor ausgebildet, das heißt, er muss elektronisch kommutiert werden. Ferner zeigt die Figur 1 eine Steuereinrichtung 2, die die zeitlichen Abläufe zur Ansteuerung des Elektromotors 3 vorgibt. Der Elektromotor 3 ist vorzugsweise als Synchronmotor ausgebildet. Die Versorgungsschaltung 1 weist eine Leistungselektronik 4 in Form einer sechspulsigen Brücke auf, die den als dreisträngigen Motor ausgebildeten Elektromotor 3 speist. Die Leistungselektronik 1 ist an einen Zwischenkreis 5 angeschlossen, in dem der fließende Strom entweder im Massezweig 6 mittels eines Stromsensors 7 oder im Versorgungszweig 8 mittels eines Stromsensors 9 gemessen wird. Die Zwischenkreisspannung wird mittels eines Zwischenkreiskondensators 10 gestützt. Die Steuereinrichtung 2 weist eine Steuereinheit 11, eine Vergleichseinheit 12 und eine Kriteriumbildungseinheit 13 auf. Steuereinheit 11, Vergleichseinheit 12 und Kriteriumbildungseinheit 13 sind miteinander vernetzt (Pfeile 14). Die von dem Stromsensor 7 beziehungsweise 9 erfassten Ströme werden der Vergleichseinheit 12 zugeführt (Pfeile 15), die Strangspannungen des Elektromotors 3 werden gemäß Pfeil 16 der Kriteriumbildungseinheit 13 zugeführt. Die Steuereinheit 11 steuert die Leistungselektronik 4 gemäß Pfeil 17 an.

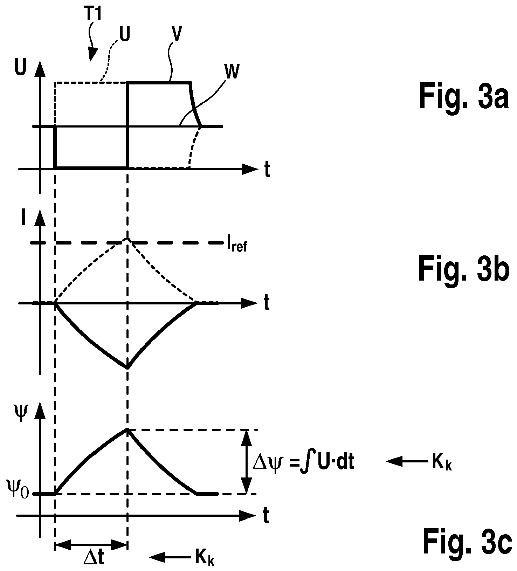

Die Steuereinheit 11 steuert während des Hochlaufs des Elektromotors 3 die Leistungselektronik 4 mit Spannungstestimpulsen T1, T2 und T3 an. Von den zwölf möglichen Zuständen der sechspulsigen Brücke der Leistungselektronik 4 werden drei Zustände, nämlich die erwähnten Spannungstestimpulse T1 bis T3 ausgewählt. Es handelt sich hierbei um eine Verkettung der Strangspannungen U, V und W, sodass der Testimpuls T1 aus den Spannungen U+(-V) resultiert; T2 resultiert aus V+(-W) und T3 aus W+(-U). T1, T2 und T3 zeichnen sich dadurch aus, dass diese jeweils eine 120° Phasenverschiebung zueinander aufweisen. Nach einem anderen Ausführungsbeispiel könnte auch eine andere Phasenverschiebung vorliegen. In der Figur 3a sind beispielhaft die Zeitverläufe zur Bildung der Testimpulse T1, T2 und T3 dargestellt. Ein Vergleich der Figuren 3a und 3b zeigt, dass der Spannungstestimpuls T1 zu einem Stromimpuls I (Figur 3b) führt. Die Beaufschlagung des Motors mit dem Spannungstestimpuls T1 erfolgt im ansonsten stromlosen Zustand. Es ergibt sich ein Stromimpuls ausgehend von I = 0 aufsteigend bis auf den Wert I = $I_{ref}$. Als Resultat der Spannungstestimpuls-Beaufschlagung ergeben sich demgemäß Stromimpulse. Nunmehr wird ein geeignetes Kriterium Kk in der Kriteriumbildungseinheit 13 gebildet, um ein Maß für die magnetische Änderung $\Delta \Psi$ zu haben. Insbesondere erfolgt eine Integration der an der Brückenschaltung liegenden Spannungsversorgung oder an den Motorklemmen oder es wird eine Versuchszeitmessung durchgeführt ($\Delta t$) oder es wird das Produkt der Versuchszeitmessung mit einem gemittelten Wert oder Momentanwert der anliegenden Spannung erzeugt. Ist die Beaufschlagung mit den Spannungstestimpulsen durchgeführt, so wird der Elektromotor 3 wieder abgeschaltet.

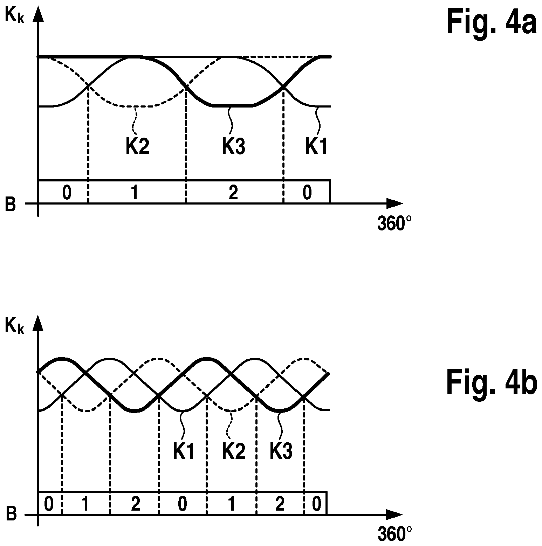

Es wird nun derart vorgegangen, dass die Testimpulse T1, T2 und T3 nacheinander ausgeführt werden und dabei die entsprechenden Kriterien K1, K2 und K3 liefern. Je nach Stromhöhe und Motorausführungen werden Induktivitätsänderungen und/oder Sättigungseffekte zum Vorschein kommen, so wie sie in den Figuren 4a und 4b dargestellt sind. Die nachfolgende Auswertung der Kriterien Kk erfolgt in der Vergleichseinheit 12 nach dem Min-Max-Prinzip. Hierdurch wird eine Positionsinformation des Rotors des Elektromotors modulo 360° gemäß Figur 4a oder modulo 180° gemäß Figur 4b möglich, wobei dies abhängig von der Motorausführung und natürlich auch von einer Parameterwahl des Verfahrens ist.

Die Figur 4a verdeutlicht positionsabhängige Nichtlinearitäten des Magnetkreises. Es ist das Kriterium Kk in Abhängigkeit der elektrischen Position (0 bis 360°) dargestellt. Es ergeben sich die Bereiche 0, 1, 2 und so weiter. Aus einem Vergleich der Werte der Kriterien K1 bis K3 lässt sich der jeweilige Bereich B bestimmen, also die jeweilige Information über den Drehwinkellagenbereich des Rotors des Elektromotors 3. Ist beispielsweise K3 und K1 maximal und K2 minimal, so liegt der Bereich 1 vor.

Die Figur 4b zeigt positionsabhängige Induktivitätsänderungen in Abhängigkeit der elektrischen Position des Rotors (0 bis 360°), wobei verschiedene Bereiche 0, 1 und 2 und so weiter dargestellt sind. Auch hier erfolgt über eine Min-Max-Auswertung die Positionsermittlung des Rotors des Elektromotors 3.

Als Kriterium kann zum Beispiel die Zeit $\Delta t$ gemäß Figur 3c herangezogen werden. Die Zeit $\Delta t$ bestimmt sich nach der Zeitdauer zwischen I = 0 und I = $I_{ref}$. Alternativ kann auch die Flussänderung $\Delta \Psi$ herangezogen werden, die aus der Stromänderung von I = 0 bis I = $I_{ref}$ resultiert.

EP 2 067 249 B1

Beim Start des Elektromotors 3 wird erstmalig eine Testimpulssequenz ausgeführt, die eine entsprechende Positionsangabe liefert. Diese wird übernommen und als Startposition für die Hochlaufsequenz verwendet. Die Position für den Schrittmotorbetrieb wird über Integration eines geeigneten Drehzahlprofils gewonnen. Um eine Drift zwischen der vermuteten Position bei der Hochlaufsequenz und der Ist-Position zu vermeiden, wird die Hochlaufsequenz gelegentlich unterbrochen, um eine Testimpulssequenz durchzuführen. Damit kann bei unplausiblen Verhältnissen eine entsprechende Korrektur der Position der Hochlaufsequenz durchgeführt werden. Die vorstehende Verfahrensweise wird selbsttätig von der Schaltungsanordnung gemäß Figur 1 durchgeführt, sodass der elektronisch kommutierende Elektromotor 1 sicher und drehstellungsgerecht hochgefahren wird.

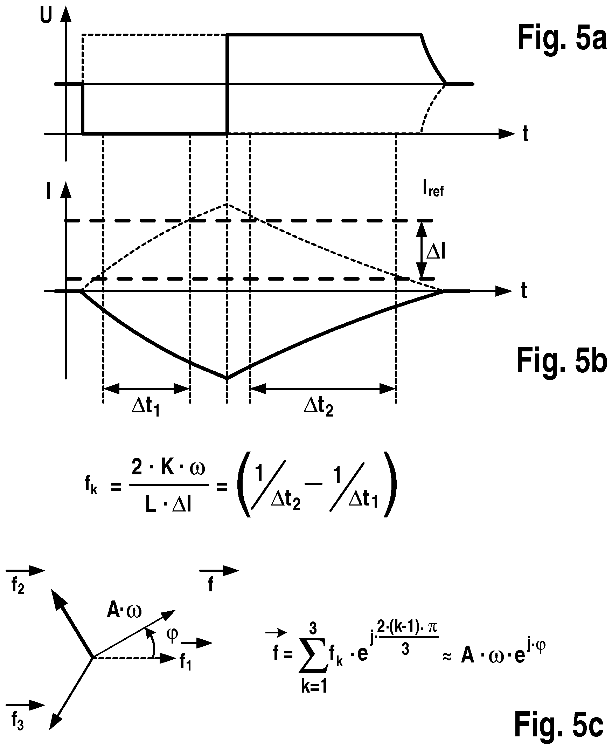

Die Figuren 5a bis 5c erläutern eine weitere Auswertemöglichkeit der Spannungstestimpulse. Zusätzlich zu der Information, die in der Anstiegszeit (wann erreicht der jeweilige Strom den Referenzwert $I_{ref}$) zu finden ist, wird auch die Abstiegszeit herangezogen. Die Grundgleichung des Elektromotors sieht aus wie folgt:

$$U = R \cdot I + L \cdot \frac{di}{dt} + K \cdot \sin(\phi_{elek}) \cdot \omega$$

Bei vernachlässigbarem Ohmschen Spannungsabfall und Annäherung der Ableitung ergibt sich:

$$U = L \cdot \frac{\Delta i}{\Delta t} + K \cdot \sin(\phi_{elek}) \cdot \omega$$

Mit der Annahme, dass die Spannungsversorgung, die Motorposition und die Drehzahl etwa konstant bleiben, erhält man:

Beim Ansteig:

$$Ub = L \cdot \frac{\Delta i}{\Delta t_1} + K \cdot \sin(\phi_{elek}) \cdot \omega$$

Beim Abstieg:

$$-Ub = -L \cdot \frac{\Delta i}{\Delta t_2} + K \cdot \sin(\phi_{elek}) \cdot \omega$$

sodass beim Aufsummieren und Umstellen für den jeweiligen Testimpuls Tk Folgendes gilt:

$$Fk = \frac{1}{\Delta t_2} - \frac{1}{\Delta t_1} = \frac{2 \cdot K \cdot \sin\left(\phi_{elek} + \frac{2 \cdot \pi \cdot k}{3}\right) \cdot \omega}{L \cdot \Delta i}$$

Wird die Größe Fk für jeden Testimpuls Tk berechnet, so kann die Vektorgröße F herangezogen werden:

$$\mathbf{F} = \sum_{k=1}^{3} Fk \cdot e^{\frac{2 \cdot \pi \cdot j \cdot (k-1)}{3}} = \frac{2 \cdot K}{L \cdot \Delta i} \cdot e^{j \cdot \phi_{elek}} \cdot \omega$$

Eine Drehzahlinformation über |$\mathbf{F}$| und eine präzisere Winkelinformation über arg $\mathbf{F}$ wird hieraus gewonnen, sodass auch mit diesem Vorgehen ein einwandfreier Hochlauf des Elektromotors 3 gewährleistet ist.

4

**Patentansprüche**

1. Verfahren zum Betreiben eines elektronisch kommutierenden Elektromotors, insbesondere während seiner Hochlaufphase, unter Berücksichtigung der jeweiligen Drehwinkellage seines Rotors, mit folgenden Schritten:

   nacheinander erfolgendes Beaufschlagen des Elektromotors mit in ihrer Phasenlage unterschiedlichen Spannungstestimpulsen,
   Bilden von mindestens einem Kriterium aus mindestens einem sich aus der Spannungstestimpuls-Beaufschlagung ergebenden Resultat,
   Erfassen der sich aus den Spannungstestimpulsen ergebenden Werte des Kriteriums und
   Bestimmen eines Bereichs der Drehwinkellage des Rotors des Elektromotors aus einem Vergleich der Werte der einzelnen Kriterien, wobei für die Kriterien eine Flussänderung $\Delta\Psi$ und eine Stromänderung der Stromimpulse herangezogen wird,

   wobei die Stromänderungen durch Messung des Zwischenkreisstroms einer Versorgungsschaltung erfasst werden, und
   wobei das Kriterium Zeitdauern sind, die zwischen dem Vorliegen zweier Stromwerte der Stromimpulse und zweier Flusswerte liegen.

2. Verfahren nach Anspruch 1, **dadurch gekennzeichnet, dass** die Spannungstestimpulse aus einer Verkettung von Phasenspannungen des Elektromotors gebildet werden.

3. Verfahren nach einem der vorhergehenden Ansprüche, **dadurch gekennzeichnet, dass** das Resultat Stromimpulse sind, die aus den Spannungstestimpulsen resultieren.

4. Verfahren nach einem der vorhergehenden Ansprüche, **dadurch gekennzeichnet, dass** die Spannungstestimpulse mindestens solange wirken, bis die Amplituden der Stromimpulse jeweils auf einen vorgegebenen Stromreferenzwert ansteigen.

5. Verfahren nach einem der vorhergehenden Ansprüche, **dadurch gekennzeichnet, dass** die Flussänderungen durch Integration der jeweiligen Motorspannung gebildet werden.

**Claims**

1. Method for operating an electronically commutating electric motor, in particular during the start-up phase thereof, taking into account the respective rotation angle position of the rotor thereof, having the following steps:

   successive application of voltage test pulses of different phase to the electric motor,
   formation of at least one criterion from at least one result produced from the voltage test pulse application,
   detection of the values of the criterion produced from the voltage test pulses and
   determination of a range of the rotation angle position of the rotor of the electric motor from a comparison of the values of the individual criteria, wherein a change in flux $\Delta\Psi$ and a change in current of the current pulses are used for the criteria,

   wherein the changes in current are detected through measurement of the intermediate circuit current of a supply circuit, and
   wherein the criteria are periods situated between the presence of two current values of the current pulses and two flux values.

2. Method according to Claim 1, **characterized in that** the voltage test pulses are formed from a concatenation of phase voltages of the electric motor.

3. Method according to either of the preceding claims, **characterized in that** the result is current pulses that result from the voltage test pulses.

4. Method according to one of the preceding claims, **characterized in that** the voltage test pulses function at least until the amplitudes of the current pulses increase to a respective prescribed current reference value.

**5.** Method according to one of the preceding claims, **characterized in that** the changes in flux are formed through integration of the respective motor voltage.

**Revendications**

**1.** Procédé pour faire fonctionner un moteur électrique à commutation électronique, en particulier pendant sa phase de démarrage, en tenant compte de la position angulaire respective de son rotor, comprenant les étapes consistant à :

> appliquer successivement au moteur électrique des impulsions de test de tension avec différentes positions de phase,
> définir au moins un critère à partir d'au moins un résultat qui résulte de l'application de l'impulsion de test de tension,
> détecter les valeurs du critère qui résultent des impulsions de test de tension et
> déterminer une plage de la position angulaire du rotor du moteur électrique à partir d'une comparaison des valeurs des critères individuels,

> dans lequel une variation du flux $\Delta\Psi$ et une variation du courant des impulsions de courant sont utilisées pour les critères,
> dans lequel les variations du courant sont détectées en mesurant le courant de circuit intermédiaire d'un circuit d'alimentation, et
> dans lequel le critère est défini par les durées qui s'écoulent entre la présence de deux valeurs de courant des impulsions de courant et de deux valeurs de flux.

**2.** Procédé selon la revendication 1, **caractérisé en ce que** les impulsions de test de tension sont produites par un enchaînement de tensions de phase du moteur électrique.

**3.** Procédé selon l'une des revendications précédentes, **caractérisé en ce que** le résultat est constitué par des impulsions de courant qui résultent des impulsions de test de tension.

**4.** Procédé selon l'une des revendications précédentes, **caractérisé en ce que** les impulsions de test de tension agissent au moins jusqu'à ce que les amplitudes des impulsions de courant atteignent respectivement une valeur de référence de courant prédéterminée.

**5.** Procédé selon l'une des revendications précédentes, **caractérisé en ce que** les variations de flux sont obtenues par intégration de la tension de moteur respective.

**Fig. 1**

**Fig. 2**

T2: V+ W-

T3: W+ U-

T1: U+ V-

V

U

W

Fig. 3a

Fig. 3b

Fig. 3c

Fig. 4a

Fig. 4b

## Fig. 5a

## Fig. 5b

$$f_k \ = \ \frac{2 \cdot K \cdot \omega}{L \cdot \Delta I} = \left( \frac{1}{\Delta t_2} - \frac{1}{\Delta t_1} \right)$$

$$\vec{f} = \sum_{k=1}^{3} f_k \cdot e^{j \cdot \frac{2 \cdot (k-1) \cdot \pi}{3}} \approx A \cdot \omega \cdot e^{j \cdot \varphi}$$

## Fig. 5c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10162380 A1
- EP 1014556 A1
- US 5841252 A
- US 2001030517 A